# EUROPÄISCHE PATENTSCHRIFT

(11) **EP 2 832 471 B1**
(45) Veröffentlichungstag und Bekanntmachung des Hinweises auf die Patenterteilung: **03.02.2016**
(21) Anmeldenummer: 13179100.6
(22) Anmeldetag: 02.08.2013
(51) Int. Cl.: B21J 15/02, F16B 5/04, F16B 19/08

(54) **Verfahren zur Herstellung einer Stanzniet-Verbindung und Bauteilverbund**
Method for producing a punch rivet connection and composite component
Procédé de connection par rivet auto-poinçonnant et élément ainsi obenu

(43) Veröffentlichungstag der Anmeldung: 04.02.2015
(73) Patentinhaber: MAGNA STEYR Engineering AG & Co KG, 8041 Graz (AT)
(72) Erfinder: Hofer, Bernhard, 8053 Graz (AT); Hörmann, Reinhard, 8151 Hitzendorf (AT)
(74) Vertreter: Zangger, Bernd

(56) Entgegenhaltungen:
- DE-A1- 19 905 528

## Beschreibung

### Gebiet der Erfindung

Die vorliegende Erfindung betrifft ein Verfahren zur Herstellung einer Stanzniet-Verbindung. Die Stanzniet-Verbindung wird zwischen einem ersten Bauteil und einem flachen zweiten Bauteil hergestellt. Die Erfindung betrifft auch einen Bauteilverbund, umfassend ein erstes Bauteil und ein flaches zweites Bauteil (siehe z.B z.B. DE-A-199 05 528).

### Stand der Technik

Verbindungen von zwei Bauteilen durch Stanznieten sind an sich bekannt. Stanznieten ist ein Nietverfahren bei dem kein Vorlochen der Bauteile erforderlich ist. Verwendet werden beispielsweise Vollnieten oder auch Halbhohlnieten. Beim Stanznieten mit einem Halbhohlniet wird der Niet durch das erste Bauteil gedrückt und verformt das zweite Bauteil, insbesondere ein Blech. Dabei verspreizt sich der Niet und das zweite Bauteil bildet einen Schließkopf für den Niet. Die Fügestelle liegt während des Nietvorganges auf einer Matrize als Gegenhalter auf.

Beim Stanznieten eines nicht flachen ersten Bauteiles mit einem zweiten, flach ausgebildeten Bauteil, kann ein Stanzniet zwar von Seiten des flach ausgebildeten Bauteils angesetzt werden, jedoch ist manchmal keine gute Zugänglichkeit auf Seiten des ersten Bauteils gegeben, so dass dort keine Matrize verwendet werden kann.

### Zusammenfassung der Erfindung

Es ist eine Aufgabe der Erfindung, ein Verfahren zur Herstellung einer Stanzniet-Verbindung zwischen einem ersten Bauteil und einem flachen zweiten Bauteil anzugeben, die auch bei schlechter Zugängigkeit für eine Matrize eingesetzt werden kann. Eine weitere Aufgabe der Erfindung ist es, einen Bauteilverbund umfassend ein erstes Bauteil und ein flaches zweites Bauteil anzugeben, der einfach herstellbar ist, auch bei schlechter Zugängigkeit für eine Matrize.

Die Lösung der Aufgabe erfolgt durch ein Verfahren zur Herstellung einer Stanzniet-Verbindung zwischen einem ersten Bauteil und einem flachen zweiten Bauteil, wobei das erste Bauteil einen Steg aufweist der im Wesentlichen normal zu einer Füge-Fläche des ersten Bauteils ausgerichtet ist, dass das zweite Bauteil an der Füge-Fläche des ersten Bauteils, im Bereich des Steges, an der dem Steg abgewandten Seite der Füge-Fläche anliegt, und dass Stanznieten, von Seite des zweiten Bauteils her, entlang des Steges gesetzt werden, so dass das zweite Bauteil mit dem ersten Bauteil verbunden wird, wobei der Steg als Matrize, also als Gegenhalter für das Stanznieten dient.

Erfindungsgemäß wird ein Steg eines Bauteils als Gegenhalter genutzt. Nieten können entlang des Steges in die zu verbindenden Bauteile eingebracht werden, ohne eine gesonderte Matrize verwenden zu müssen.

Die Lösung der Aufgabe erfolgt auch durch einen Bauteilverbund umfassend ein erstes Bauteil und ein flaches zweites Bauteil, wobei das erste Bauteil einen Steg aufweist der im Wesentlichen normal zu einer Füge-Fläche des ersten Bauteils ausgerichtet ist, wobei das zweite Bauteil an der Füge-Fläche des ersten Bauteils, im Bereich des Steges, an der dem Steg abgewandten Seite der Füge-Fläche anliegt, und wobei Stanznieten, von Seite des zweiten Bauteils her, entlang des Steges gesetzt sind, so dass das zweite Bauteil mit dem ersten Bauteil verbunden ist.

Weiterbildungen der Erfindung sind in den abhängigen Ansprüchen, der Beschreibung sowie den beigefügten Zeichnungen angegeben.

Bevorzugt ist das erste Bauteil ein Hohlprofil und der Steg ein Zwischensteg des Hohlprofils. Insbesondere kann der Steg von einer Begrenzungsfläche des ersten Bauteils, nämlich der Füge-Fläche, bis zu einer gegenüberliegenden Begrenzungsfläche reichen. Insbesondere kann der Zwischensteg als Mittelsteg ausgeführt sein, also im Wesentlichen mittig zwischen zwei seitlichen Begrenzungsflächen des Hohlprofils angeordnet sein.

Bevorzugt weisen die Stanznieten jeweils zwei Schenkel auf, wobei die beiden Schenkel beiderseits des Steges ausgerichtet werden, also jeweils ein Schenkel links und ein Schenkel rechts am Steg, so dass die Mittellinie des Steges im Wesentlichen mit der Mittellinie zwischen den Schenkeln der Niet zusammenfällt. Dadurch kann der Steg optimal als Gegenhalter wirken und ein Aufspreizen der Niet bewirken.

Besonders bevorzugt weisen die Stanznieten einen nicht-rotationssymmetrischen Kopf auf, insbesondere einen viereckigen Kopf, um insbesondere das Positionieren des Niets in einer Setzmaschine zu vereinfachen oder zu ermöglichen. Der nicht-rotationssymmetrische Kopf der Nieten ist bevorzugt zu den Schenkeln der Nieten immer gleich ausgerichtet. Hierdurch ist beim Setzen der Nieten leicht ersichtlich, wo sich die Schenkel befinden.

Besonders bevorzugt sind die Enden der Schenkel der Stanznieten gespitzt ausgeführt, insbesondere als Schneidkanten, damit sich diese besser durch die Bauteile schneiden können. Insbesondere können die Spitzen jeweils außen an den Schenkeln liegen, wodurch sich der Niet rascher zu spreizen beginnt.

Nach einer Ausführungsform des Verfahrens durchdringen die Enden der Schenkel der Stanznieten die Füge-Fläche des ersten Bauteils nicht. Die hergestellte Verbindung ist dann dicht und hält gut durch einen Hinterschnitt im erstem Bauteil.

Nach einer anderen Ausführungsform des Verfahrens durchdringen die Enden der Schenkel der Stanznieten die Füge-Fläche des ersten Bauteils.

Bevorzugt werden die Stanznieten durch eine Setzmaschine gesetzt, insbesondere automatisiert.

Mit einem zweiten Setzkopf oder Doppelsetzkopf an der gegenüberliegenden Seite des jeweiligen Steges kann, beispielsweise gleichzeitig, ein weiteres zweites Bauteil am ersten Bauteil befestigt werden.

Die Position des Steges ist dann in der Setzmaschine bevorzugt konfigurierbar, so dass die Setzmaschine die Position und Ausrichtung des Steges beim Setzen der Stanznieten kennt.

Die Position des Steges kann auch am zweiten Bauteil markiert sein, insbesondere an dessen nach außen gerichteter Oberfläche, so dass von dieser Seite aus ersichtlich ist wo die Nieten gesetzt werden müssen.

Die Stanznieten können auch mittels einer Schablone auf dem zweiten Bauteil positioniert werden.

In einem erfindungsgemäßen Verfahren ist aufgrund der Nutzung des Steges als Matrize kein gesonderter Gegenhalter erforderlich. Es kann jedoch erfindungsgemäß dennoch ein Gegenhalter beim Setzen der Nieten verwendet werden, der insbesondere an einer Begrenzungsfläche des ersten Bauteils anliegt, die der Füge-Fläche gegenüber liegt, um die Maßhaltigkeit zu erhöhen.

Ein erfindungsgemäßer Bauteilverbund umfasst ein erstes Bauteil und ein flaches zweites Bauteil, wobei das erste Bauteil einen Steg aufweist der im Wesentlichen normal zu einer Füge-Fläche des ersten Bauteils ausgerichtet ist, wobei das zweite Bauteil an der Füge-Fläche des ersten Bauteils, im Bereich des Steges, an der dem Steg abgewandten Seite der Füge-Fläche anliegt, und wobei Stanznieten, von Seite des zweiten Bauteils her, entlang des Steges gesetzt sind, so dass das zweite Bauteil mit dem ersten Bauteil verbunden ist.

Dabei ist bevorzugt das erste Bauteil ein Hohlprofil und der Steg ein Zwischensteg, insbesondere ein Mittelsteg, des Hohlprofils.

Das erste Bauteil kann auch ein Hohlprofil mit einer Vielzahl von Stegen, insbesondere einer Vielzahl von Zwischenstegen sein, wobei das erste Bauteil erfindungsgemäß, an einem, an manchen oder an allen Stegen mit einem zweiten Bauteil mittels Stanznieten verbunden werden kann.

Die Stanznieten weisen bevorzugt jeweils zwei Schenkel auf, wobei die beiden Schenkel beiderseits des Steges ausgerichtet sind.

Bevorzugt weisen die Stanznieten einen nicht-rotationssymmetrischen Kopf auf, insbesondere einen viereckigen Kopf.

Die Enden der Schenkel der Stanznieten sind bevorzugt gespitzt ausgeführt, insbesondere als Schneidkanten, insbesondere mit jeweils außen liegenden Spitzen.

Die Enden der Schenkel der Stanznieten können die Füge-Fläche des ersten Bauteils durchdringen oder auch nicht durchdringen.

### Kurzbeschreibung der Zeichnungen

Die Erfindung wird im Folgenden beispielhaft unter Bezugnahme auf die Zeichnungen beschrieben.
- Fig. 1: ist eine schematische dreidimensionale Darstellung eines ersten Bauteils und eines flachen zweiten Bauteils zur Herstellung eines erfindungsgemäßen Bauteilverbunds.
- Fig. 2: ist eine schematische Schnittdarstellung eines erfindungsgemäßen Bauteilverbunds.
- Fig. 3: ist ein Ausschnitt gem. dem strichlierten Kreis aus Fig. 2.
- Fig. 4: ist eine schematische dreidimensionale Darstellung eines Stanzniets zur Herstellung eines erfindungsgemäßen Bauteilverbunds.
- Fig. 5: ist eine schematische dreidimensionale Darstellung eines Stanzniets zur Herstellung eines erfindungsgemäßen Bauteilverbunds.
- Fig. 6: ist eine schematische dreidimensionale Darstellung eines Stanzniets zur Herstellung eines erfindungsgemäßen Bauteilverbunds.
- Fig. 7: ist eine schematische dreidimensionale Darstellung eines erfindungsgemäßen Bauteilverbunds.
- Fig. 8: ist eine schematische Darstellung eines erfindungsgemäßen Bauteilverbunds von vorne.
- Fig. 9: ist eine schematische dreidimensionale Darstellung eines Stanzniets zur Herstellung eines erfindungsgemäßen Bauteilverbunds.
- Fig. 10: ist eine schematische Darstellung einer Vorrichtung zur erfindungsgemäßen Herstellung einer StanznietVerbindung.

### Detaillierte Beschreibung der Erfindung

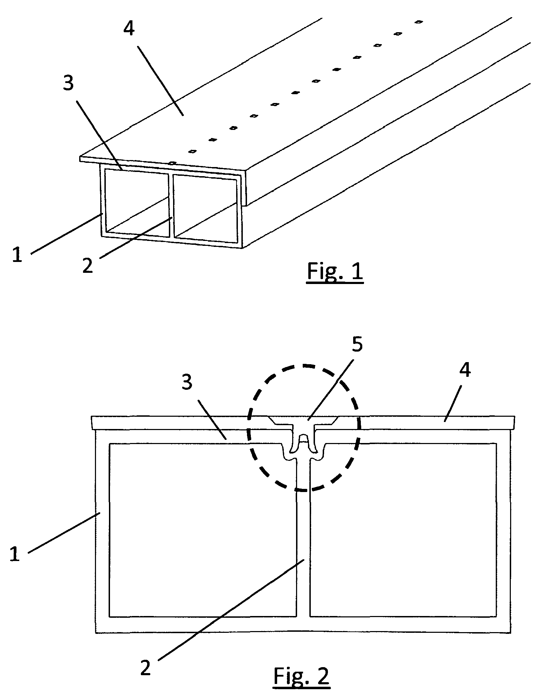

In Fig. 1 ist ein erstes Bauteil 1 und ein flaches zweites Bauteil 4 dargestellt, die miteinander verbunden werden sollen. Dabei ist das erste Bauteil 1 als Hohlprofil ausgebildet, dass einen Steg 2 aufweist, der einen mittig ausgerichteten Zwischensteg des Hohlprofils bildet. Die obere Fläche des Hohlprofils bildet eine Füge-Fläche 3 und dient zur Fügung mit dem zweiten Bauteil 4. Auf dem zweiten Bauteil 4 sind bereits mögliche Positionen zur Setzung von Stanznieten markiert, wobei diese Positionen jeweils genau über dem Steg 2 des ersten Bauteils 1 angeordnet sind.

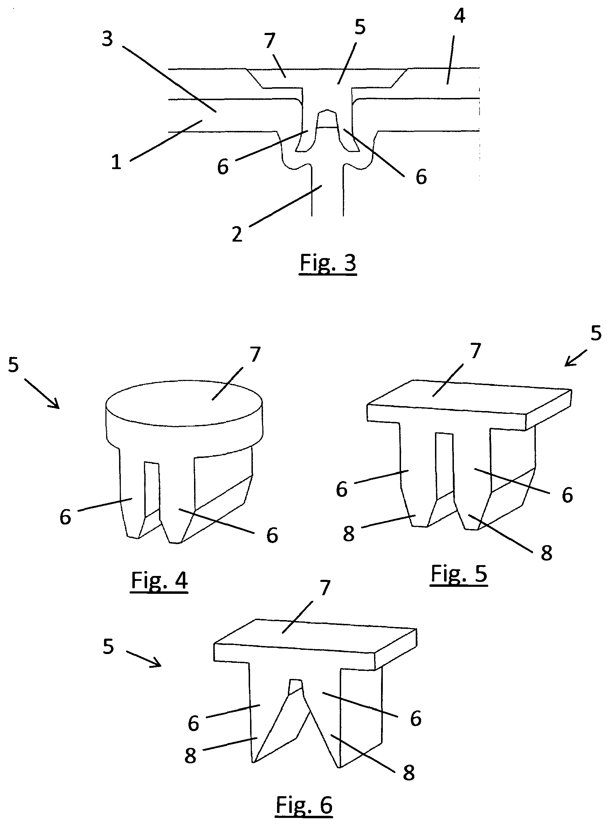

Fig. 2 ist eine schematische Schnittdarstellung eines erfindungsgemäßen Bauteilverbunds. In Fig. 3 ist der Ausschnitt, der in Fig. 2 als strichlierter Kreis eingezeichnet ist, genauer dargestellt. Ein Stanzniet 5 ist von Seite des zweiten Bauteils 4 her, auf Höhe des Steges 2 gesetzt, so dass das zweite Bauteil 4 mit dem ersten Bauteil 1 verbunden ist. Beim Setzen der Stanzniet 5 wurde der Steg 2 als Matrize verwendet. Der Stanzniet 5 weist zwei Schenkel 6 auf, die im Wesentlichen links bzw. rechts vom Steg 2 positioniert sind, so dass sie beim Setzen vom Steg 2 jeweils seitlich abgelenkt werden. In der dargestellten Ausführungsform durchdringen die Enden der Schenkel 6 der Stanzniete 5 die Füge-Fläche 3 des ersten Bauteils 1 nicht. Die Füge-Fläche 3 des ersten Bauteils 1 wird jedoch durch den Stanzniet 5 verformt.

Fig. 4, 5 und 6 sind schematische dreidimensionale Darstellungen von Stanznieten 5 zur Herstellung eines erfindungsgemäßen Bauteilverbunds. Dir dargestellten Varianten unterscheiden sich vor allem durch die geometrische Ausführung der Köpfe 7 sowie der Schenkel 6 der Stanznieten 5. Fig. 4 und 5 weisen jeweils mittig gespitzte Schenkel 6 auf, Fig. 6 stellt eine Stanzniet 5 dar, wobei die Enden der Schenkel 6 jeweils außen spitz zulaufen. Die Köpfe der Ausführungen gem. Fig. 5 und 6 sind rechteckig ausgebildet, so dass auch an der Oberseite der Stanzniet die Lage der Schenkel 6 erkennbar ist.

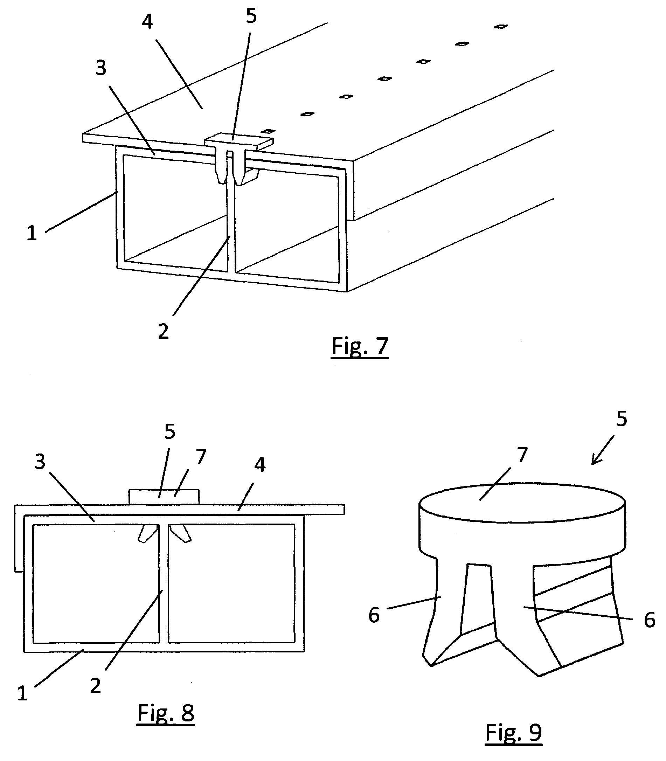

In Fig. 9 ist eine Stanzniet 5 entsprechend der Fig. 4, jedoch nach Setzen der Stanzniet 5, dargestellt. Die Schenkel 6 sind dabei nach außen gebogen.

Fig. 7 und Fig. 8 stellen einen erfindungsgemäßen Bauteilverbund dar, wobei stets eine Stanzniet 5 so über dem Steg 2 gesetzt ist, dass die Schenkel 6 der Stanzniet beiderseits des Steges 2 positioniert sind. Zum Fügen der Bauteile 1, 4 werden üblicherweise selbstverständlich viele Stanznieten 5 entlang des Steges 2 gesetzt. Auch wird üblicherweise der Kopf 7 der Stanznieten 5 in einer weniger schematischen Darstellung annähernd bündig mit dem zweiten Bauteil 4 abschließen.

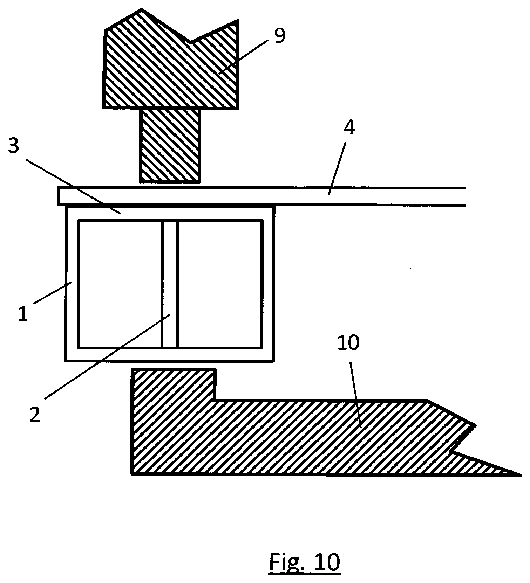

Fig. 10 stellt schließlich eine Vorrichtung zur erfindungsgemäßen Herstellung einer Stanzniet-Verbindung dar. Diese Vorrichtung umfasst eine Setzmaschine mit einem Setzkopf 9 und einem Gegenhalter 10, wobei der Gegenhalter nicht als Matrize zum Setzen der Stanzniet an der Unterseite der Füge-Fläche 3 positioniert ist, sondern an der Unterseite des Hohlprofils positioniert ist und der besseren Maßhaltigkeit bei der Herstellung dient. Zwischen Gegenhalter 10 und Setzkopf 9 sind das erste Bauteil 1 und das zweite Bauteil 4 angeordnet.

### Bezugszeichenliste

- 1: erstes Bauteil
- 2: Steg
- 3: Füge-Fläche
- 4: zweites Bauteil
- 5: Stanzniet
- 6: Schenkel
- 7: Kopf
- 8: Spitze
- 9: Setzkopf
- 10: Gegenhalter

## Patentansprüche

1. Verfahren zur Herstellung einer Stanzniet-Verbindung zwischen einem ersten Bauteil und einem flachen zweiten Bauteil,
**dadurch gekennzeichnet, dass** das erste Bauteil (1) einen Steg (2) aufweist der im Wesentlichen normal zu einer Füge-Fläche (3) des ersten Bauteils (1) ausgerichtet ist, dass das zweite Bauteil (4) an der Füge-Fläche (3) des ersten Bauteils (1), im Bereich des Steges (2), an der dem Steg (2) abgewandten Seite der Füge-Fläche (3) anliegt, und dass Stanznieten (5), von Seite des zweiten Bauteils (4) her, entlang des Steges (2) gesetzt werden, so dass das zweite Bauteil (4) mit dem ersten Bauteil (1) verbunden wird, wobei der Steg (2) als Matrize für das Stanznieten dient.

2. Verfahren nach Anspruch 1,
**dadurch gekennzeichnet, dass** das erste Bauteil (1) ein Hohlprofil ist und der Steg (2) ein Zwischensteg des Hohlprofils.

3. Verfahren nach Anspruch 1 oder 2,
**dadurch gekennzeichnet, dass** die Stanznieten (5) jeweils zwei Schenkel (6) aufweisen, wobei die beiden Schenkel (6) beiderseits des Steges (2) ausgerichtet werden.

4. Verfahren nach zumindest einem der vorhergehenden Ansprüche,
**dadurch gekennzeichnet, dass** die Stanznieten (5) einen nicht-rotationssymmetrischen Kopf (7) aufweisen, insbesondere einen viereckigen Kopf (7).

5. Verfahren nach zumindest einem der vorhergehenden Ansprüche,
**dadurch gekennzeichnet, dass** die Enden der Schenkel (6) der Stanznieten (5) gespitzt ausgeführt sind, insbesondere mit jeweils außen liegenden Spitzen (8).

6. Verfahren nach zumindest einem der vorhergehenden Ansprüche,
**dadurch gekennzeichnet, dass** die Enden der Schenkel (6) der Stanznieten (5) die Füge-Fläche (3) des ersten Bauteils (1) nicht durchdringen.

7. Verfahren nach zumindest einem der Ansprüche 1 bis 6,
**dadurch gekennzeichnet, dass** die Enden der Schenkel (6) der Stanznieten (5) die Füge-Fläche (3) des ersten Bauteils durchdringen.

8. Verfahren nach zumindest einem der vorhergehenden Ansprüche,
**dadurch gekennzeichnet, dass** die Stanznieten (5) durch eine Setzmaschine gesetzt werden.

9. Verfahren nach Anspruch 8,
**dadurch gekennzeichnet, dass** die Position des Steges (2) in der Setzmaschine konfigurierbar ist.

10. Verfahren nach zumindest einem der vorhergehenden Ansprüche,
**dadurch gekennzeichnet, dass** die Position des Steges (2) am zweiten Bauteil (4) markiert ist.

11. Verfahren nach zumindest einem der vorhergehenden Ansprüche,
**dadurch gekennzeichnet, dass** die Stanznieten (5) mittels einer Schablone auf dem zweiten Bauteil (4) positioniert werden.

12. Bauteilverbund umfassend ein erstes Bauteil und ein flaches zweites Bauteil,
**dadurch gekennzeichnet, dass** das erste Bauteil (1) einen Steg (2) aufweist der im Wesentlichen normal zu einer Füge-Fläche (3) des ersten Bauteils (1) ausgerichtet ist, dass das zweite Bauteil (4) an der Füge-Fläche (3) des ersten Bauteils (1), im Bereich des Steges (2), an der dem Steg (2) abgewandten Seite der Füge-Fläche (3) anliegt, und dass Stanznieten (5), von Seite des zweiten Bauteils (4) her, entlang des Steges (2) gesetzt sind, so dass das zweite Bauteil (4) mit dem ersten Bauteil (1) verbunden ist.

13. Bauteilverbund nach Anspruch 12,
**dadurch gekennzeichnet, dass** das erste Bauteil (1) ein Hohlprofil ist und der Steg (2) ein Zwischensteg des Hohlprofils.

14. Bauteilverbund nach Anspruch 12 oder 13,
**dadurch gekennzeichnet, dass** die Stanznieten (5) jeweils zwei Schenkel (6) aufweisen, wobei die beiden Schenkel (6) beiderseits des Steges (2) ausgerichtet sind.

15. Bauteilverbund nach zumindest einem der Ansprüche 12 bis 14,
**dadurch gekennzeichnet, dass** die Stanznieten (5) einen nicht-rotationssymmetrischen Kopf (7) aufweisen, insbesondere einen viereckigen Kopf (7).

16. Bauteilverbund nach zumindest einem der Ansprüche 12 bis 15,
**dadurch gekennzeichnet, dass** die Enden der Schenkel (6) der Stanznieten (5) gespitzt ausgeführt sind, insbesondere mit jeweils außen liegenden Spitzen (8).

17. Bauteilverbund nach zumindest einem der Ansprüche 12 bis 16,
**dadurch gekennzeichnet, dass** die Enden der Schenkel (6) der Stanznieten (5) die Füge-Fläche (3) des ersten Bauteils (1) nicht durchdringen.

18. Bauteilverbund nach zumindest einem der Ansprüche 12 bis 16,
**dadurch gekennzeichnet, dass** die Enden der Schenkel (6) der Stanznieten (5) die Füge-Fläche (3) des ersten Bauteils (1) durchdringen.

## Claims

1. Method for producing a punch-riveted connection between a first component and a flat second component,
**characterized in that** the first component (1) has a crosspiece (2) which is oriented substantially normally to a joining surface (3) of the first component (1), **in that** the second component (4) rests against the joining surface (3) of the first component (1), in the region of the crosspiece (2), on that side of the joining surface (3) that faces away from the crosspiece (2), and **in that** punch rivets (5) are set along the crosspiece (2), from the second component (4) side, such that the second component (4) is connected to the first component (1), wherein the crosspiece (2) acts as a die for the punch riveting.

2. Method according to Claim 1,
**characterized in that** the first component (1) is a hollow profile and the crosspiece (2) an intermediate crosspiece in the hollow profile.

3. Method according to Claim 1 or 2,
**characterized in that** the punch rivets (5) each have two legs (6), wherein the two legs (6) are oriented on either side of the crosspiece (2).

4. Method according to at least one of the preceding claims,
**characterized in that** the punch rivets (5) have a non-rotationally symmetrical head (7), in particular a quadrangular head (7).

5. Method according to at least one of the preceding claims,
**characterized in that** the ends of the legs (6) of the punch rivets (5) are embodied in a pointed manner, in particular with points (8) located in each case on the outside.

6. Method according to at least one of the preceding claims,
**characterized in that** the ends of the legs (6) of the punch rivets (5) do not pass through the joining surface (3) of the first component (1).

7. Method according to at least one of Claims 1 to 6,
**characterized in that** the ends of the legs (6) of the punch rivets (5) pass through the joining surface (3) of the first component.

8. Method according to at least one of the preceding claims,
**characterized in that** the punch rivets (5) are set by a setting machine.

9. Method according to Claim 8,
**characterized in that** the position of the crosspiece (2) is configurable in the setting machine.

10. Method according to at least one of the preceding claims,
**characterized in that** the position of the crosspiece (2) is marked on the second component (4).

11. Method according to at least one of the preceding claims,
**characterized in that** the punch rivets (5) are positioned on the second component (4) by means of a template.

12. Composite component comprising a first component and a flat second component,
**characterized in that** the first component (1) has a crosspiece (2) which is oriented substantially normally to a joining surface (3) of the first component (1), **in that** the second component (4) rests against the joining surface (3) of the first component (1), in the region of the crosspiece (2), on that side of the joining surface (3) that faces away from the crosspiece (2), and **in that** punch rivets (5) are set along the crosspiece (2), from the second component (4) side, such that the second component (4) is connected to the first component (1).

13. Composite component according to Claim 12,
**characterized in that** the first component (1) is a hollow profile and the crosspiece (2) an intermediate crosspiece in the hollow profile.

14. Composite component according to Claim 12 or 13,
**characterized in that** the punch rivets (5) each have two legs (6), wherein the two legs (6) are oriented on either side of the crosspiece (2).

15. Composite component according to at least one of Claims 12 to 14,
**characterized in that** the punch rivets (5) have a non-rotationally symmetrical head (7), in particular a quadrangular head (7).

16. Composite component according to at least one of Claims 12 to 15,
**characterized in that** the ends of the legs (6) of the punch rivets (5) are embodied in a pointed manner, in particular with points (8) located in each case on the outside.

17. Composite component according to at least one of Claims 12 to 16,
**characterized in that** the ends of the legs (6) of the punch rivets (5) do not pass through the joining surface (3) of the first component (1).

18. Composite component according to at least one of Claims 12 to 16,
**characterized in that** the ends of the legs (6) of the punch rivets (5) pass through the joining surface (3) of the first component.

## Revendications

1. Procédé de connexion par rivet auto-poinçonnant entre un premier élément et un deuxième élément plat,
**caractérisé en ce que** le premier élément (1) présente une nervure (2) qui est orientée essentiellement perpendiculairement à une surface d'assemblage (3) du premier élément (1), **en ce que** le deuxième élément (4) s'applique contre la surface d'assemblage (3) du premier élément (1) dans la région de la nervure (2), au niveau du côté de la surface d'assemblage (3) opposé à la nervure (2), et **en ce que** des rivets auto-poinçonnants (5), depuis le côté du deuxième élément (4), sont posés le long de la nervure (2) de telle sorte que le deuxième élément (4) soit connecté au premier élément (1), la nervure (2) servant de matrice pour les rivets auto-poinçonnants.

2. Procédé selon la revendication 1,
**caractérisé en ce que** le premier élément (1) est un profilé creux et la nervure (2) est une nervure intermédiaire du profilé creux.

3. Procédé selon la revendication 1 ou 2,
**caractérisé en ce que** les rivets auto-poinçonnants (5) présentent chacun deux branches (6), les deux branches (6) étant orientées de chaque côté de la nervure (2).

4. Procédé selon au moins l'une quelconque des revendications précédentes,
**caractérisé en ce que** les rivets auto-poinçonnants (5) présentent une tête n'ayant pas une symétrie de révolution (7), en particulier une tête rectangulaire (7).

5. Procédé selon au moins l'une quelconque des revendications précédentes,
**caractérisé en ce que** les extrémités des branches (6) des rivets auto-poinçonnants (5) sont réalisées sous forme pointue, en particulier avec une pointe respective située à l'extérieur (8).

6. Procédé selon au moins l'une quelconque des revendications précédentes,
**caractérisé en ce que** les extrémités des branches (6) des rivets auto-poinçonnants (5) ne traversent pas la surface d'assemblage (3) du premier élément (1).

7. Procédé selon au moins l'une quelconque des revendications 1 à 6,
**caractérisé en ce que** les extrémités des branches (6) des rivets auto-poinçonnant (5) traversent la surface d'assemblage (3) du premier élément.

8. Procédé selon au moins l'une quelconque des revendications précédentes,
**caractérisé en ce que** les rivets auto-poinçonnants (5) sont posés par une machine de pose.

9. Procédé selon la revendication 8,
**caractérisé en ce que** la position de la nervure (2) dans la machine de pose peut être configurée.

10. Procédé selon au moins l'une quelconque des revendications précédentes,
**caractérisé en ce que** la position de la nervure (2) sur le deuxième élément (4) est marquée.

11. Procédé selon au moins l'une quelconque des revendications précédentes,
**caractérisé en ce que** les rivets auto-poinçonnants (5) sont positionnés sur le deuxième élément (4) au moyen d'un gabarit.

12. Élément assemblé comprenant un premier élément et un deuxième élément plat,
**caractérisé en ce que** le premier élément (1) présente une nervure (2) qui est orientée essentiellement perpendiculairement à une surface d'assemblage (3) du premier élément (1), **en ce que** le deuxième élément (4) s'applique contre la surface d'assemblage (3) du premier élément (1) dans la région de la nervure (2), au niveau du côté de la surface d'assemblage (3) opposé à la nervure (2), et **en ce que** des rivets auto-poinçonnants (5), depuis le côté du deuxième élément (4), sont posés le long de la nervure (2) de telle sorte que le deuxième élément (4) soit connecté au premier élément (1).

13. Élément assemblé selon la revendication 12,
**caractérisé en ce que** le premier élément (1) est un profilé creux et la nervure (2) est une nervure intermédiaire du profilé creux.

14. Élément assemblé selon la revendication 12 ou 13,
**caractérisé en ce que** les rivets auto-poinçonnants (5) présentent chacun deux branches (6), les deux branches (6) étant orientées de chaque côté de la nervure (2).

15. Élément assemblé selon au moins l'une quelconque des revendications 12 à 14,
**caractérisé en ce que** les rivets auto-poinçonnants (5) présentent une tête n'ayant pas une symétrie de révolution (7), en particulier une tête rectangulaire (7).

16. Élément assemblé selon au moins l'une quelconque des revendications 12 à 15,
**caractérisé en ce que** les extrémités des branches (6) des rivets auto-poinçonnants (5) sont réalisées sous forme pointue, en particulier avec une pointe respective située à l'extérieur (8).

17. Élément assemblé selon au moins l'une quelconque des revendications 12 à 16,
**caractérisé en ce que** les extrémités des branches (6) des rivets auto-poinçonnants (5) ne traversent pas la surface d'assemblage (3) du premier élément (1).

18. Élément assemblé selon au moins l'une quelconque des revendications 12 à 16,
**caractérisé en ce que** les extrémités des branches (6) des rivets auto-poinçonnant (5) traversent la surface d'assemblage (3) du premier élément (1).
